# EUROPEAN PATENT APPLICATION

(11) **EP 2 159 250 A1**
(43) Date of publication of application: **03.03.2010**
(21) Application number: 08752369.2
(22) Date of filing: 07.05.2008
(51) Int. Cl.: C08G 77/38, C08B 37/16

(54) **POLYROTAXANE HAVING MAIN CHAIN BACKBONE ESSENTIALLY COMPOSED OF -Si-O- AND METHOD FOR PRODUCING THE SAME, AND CROSSLINKED POLYROTAXANE OBTAINED BY CROSSLINKING THE POLYROTAXANE AND METHOD FOR PRODUCING THE SAME**

(30) Priority: 15.06.2007 JP 2007158494
(71) Applicant: The University of Tokyo, Bunkyo-Ku Tokyo 113-8654 (JP)
(72) Inventor: ITO, Kohzo, Tokyo 113-8654 (JP); KATO, Kazuaki, Tokyo 113-8654 (JP); KIDOWAKI, Masatoshi, Tokyo 113-8654 (JP)
(74) Representative: Reitstötter - Kinzebach
(86) International application number: PCT/JP2008/058477
(87) International publication number: WO 2008/155953

(57) **Abstract**

Disclosed are a novel polyrotaxane having a main chain backbone essentially composed of -Si-O-, and a method for producing such a novel polyrotaxane. Also disclosed are a polyrotaxane having stretchability and/or viscoelasticity, while exhibiting oxygen permeability, heat resistance, chemical resistance, environmental resistance and/or durability, and a method for producing such a polyrotaxane. Further disclosed are a crosslinked polyrotaxane obtained by crosslinking the polyrotaxane with another polymer and/or polyrotaxane through a chemical bond, and a method for producing such a crosslinked polyrotaxane. Specifically disclosed is a polyrotaxane obtained by arranging blocking groups on both ends of a pseudopolyrotaxane, wherein a linear molecule passes through the open portion of a circular molecule in a skewering manner, for preventing elimination of the circular molecule from the linear molecule. In this polyrotaxane, the linear molecule has a main chain backbone essentially composed of -Si-O-.

## Description

### Technical Field

The present invention relates to a polyrotaxane having a main chain backbone consisting essentially of -Si-O-, and a method for producing the polyrotaxane. The present invention relates to a crosslinked polyrotaxane obtained by crosslinking the polyrotaxane, and a method for producing the crosslinked polyrotaxane.

### Background Art

Conventionally, a polyrotaxane, which is comprised of a pseudopolyrotaxane, which comprises a linear molecule and cyclic molecules in which the linear molecule is included in a cavity of cyclic molecules in a skewered manner, and capping groups, each of which is located at each end of the pseudopolyrotaxane in order to prevent the dissociation of the cyclic molecules, and a crosslinked polyrotaxane obtained by crosslinking the polyrotaxanes are disclosed in Patent Document 1.

Examples of Patent Document 1 disclose a crosslinked polyrotaxane, such that α-cyclodextrin and polyethylene glycol are used as a cyclic molecule and a linear molecule, respectively.

Further, Non-Patent Document 1 discloses a pseudopolyrotaxane, such that polysiloxane and γ-cyclodextrin are used as a linear molecule and a cyclic molecule, respectively.

However, a polyrotaxane, such that an end of polysiloxane as a linear molecule is capped with a capping group, has not been developed yet.
Patent Document 1: Japanese Patent Publication No. 3475252.
Non-Patent Document 1: Macromolecules 33, 4397(2000).

### Disclosure of the Invention

### Problems to be solved by the Invention

An object of the present invention is to provide an undeveloped polyrotaxane having a main chain backbone consisting essentially of a backbone represented by following formula X (hereinafter, the backbone is occasionally abbreviated herein as "-Si-O-"), and a method for producing the polyrotaxane.

Further, an object of the present invention is to provide a polyrotaxane having stretchability and/or viscoelasticity as well as oxygen permeability, heat resistance, chemical resistance, environmental resistance and/or durability, and a method for producing the polyrotaxane.

More, other than or in addition to the above object, an object of the present invention is to provide a crosslinked polyrotaxane obtained by crosslinking the polyrotaxane with another polymer and/or polyrotaxane through a chemical bond, and a method for producing the crosslinked polyrotaxane.

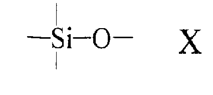

### Means for Solving Problems

The present inventors earnestly studied in order to achieve the above objects, and have found following inventions:
<1> A polyrotaxane comprising a pseudopolyrotaxane, which has a linear molecule and a cyclic molecule(s) in which the linear molecule is included in a cavity (cavities) of the cyclic molecule(s) in a skewered manner, and capping groups, each of which locates at each end of the pseudopolyrotaxane in order to prevent the dissociation of the cyclic molecule(s),
   wherein a main chain backbone of the linear molecule consists essentially of a backbone represented by following formula X: 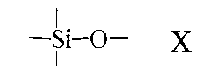
<2> In the above item <1>, the linear molecule may consist essentially of a main chain backbone represented by following formula I: 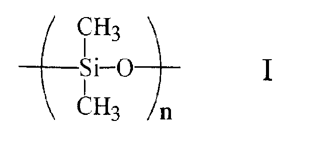
<3> In the above item <1> or <2>, a molecular weight of the linear molecule may be 3,000 or more, preferably 5,000 to 1,000,000, more preferably 10,000 to 500,000.
<4> In any one of the above items <1> to <3>, the capping group may be at least one selected from the group consisting of a group having a triphenylmethyl group (each phenyl group may be substituted), a group having a cyclodextrin derivative, a group having a silsesquioxane derivative, a group having a crown ether derivative, a group having a porphyrin derivative, a group having a phthalocyanine derivative, a group having a tetraphene derivative, a group having a chrysene derivative, a group having a rhodamine derivative, a group having a fluorescein derivative, and a group having a dendrimer. Prepefably, the capping group may be a group having a triphenylmethyl group (each phenyl group may be substituted).
<5> In the above item <4>, the group having a triphenylmethyl group may be a group represented by following formula II. Furthermore, (R₁, R₂, R₃) in the formula II may be selected from the group consisting of (H, H, H), (CH₃, CH₃, CH₃), (OCH₃, OCH₃, OCH₃), (OCH₃, H, H), (OCH₃, OCH₃, H), (C(CH₃)₃, C(CH₃)₃, C(CH₃)₃), (C₆H₅, C₆H₅, C₆H₅), (O-CO-C₆H₅, O-CO-C₆H₅, O-CO-C₆H₅), and (N(CH₂CH₂OH)₂, N(CH₂CH₂OH)₂, N(CH₂CH₂OH)₂): 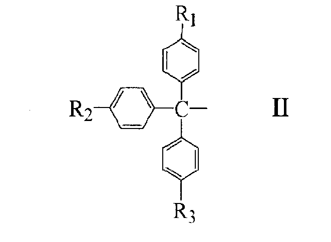
<6> In any one of the above items <1> to <5>, the cyclic molecule may be derived from γ-cyclodextrin, and the linear molecule may be polydimethylsiloxane. Further, the capping group may be the group having a triphenylmethyl group (each phenyl group may be substituted), in particular, a tri(4-methoxyphenyl)methyl group.
<7> In any one of the above items <1> to <6>, the linear molecule may be polydimethylsiloxane having at an end a group having an -NH₂ group.
<8> In any one of the above items <1> to <6>, the linear molecule may be polydimethylsiloxane having at an end a group having a -COOH group.
<9> In any one of the above items <1> to <6>, the linear molecule may be polydimethylsiloxane having at an end a group having an active ester group.
<10> In the above item <9>, the active ester group may be at least one selected from the group consisting of groups represented by formulae IV-1 to IV-6: 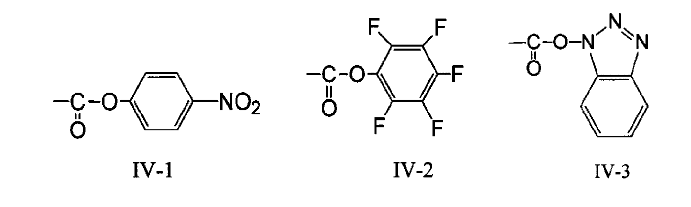 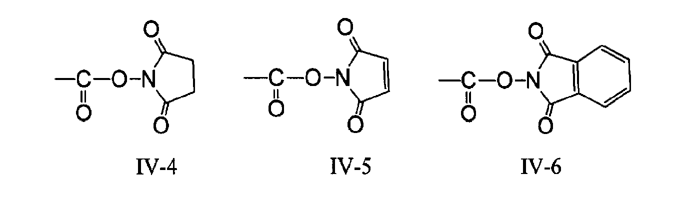
<11> In any one of the above items <4> to <10>, the group having the triphenylmethyl group (each phenyl group may be substituted) may be any one of groups represented by formulae III-1 to III-3, wherein x represents an integer of 2 to 8, preferably 4 to 6: 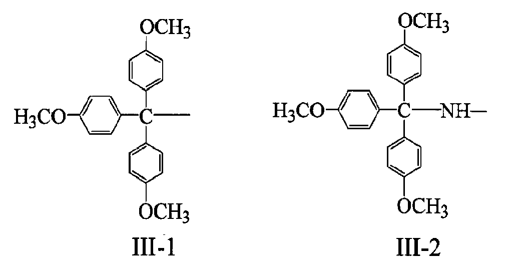 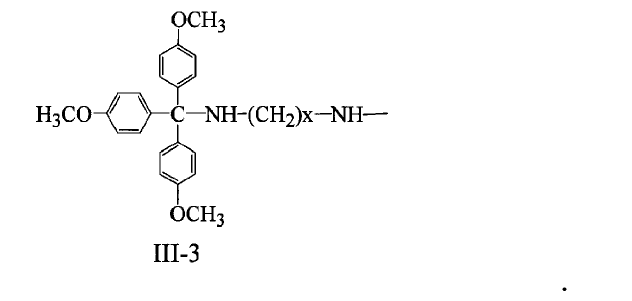
<12> In any one of the above items <1> to <11>, the linear molecule may have the cyclic molecule included in a skewered manner at an amount of 0.001 to 0.9, preferably 0.01 to 0.8, more preferably 0.05 to 0.6 of a maximum inclusion amount, which is defined as an amount at which the cyclic molecules can be included at maximum when the linear molecule has the cyclic molecules included in a skewered manner, and the amount at maximum is normalized to be 1.
<13> A material comprising the polyrotaxane described in any one of the above items <1> to <12>.
<14> A method for producing a polyrotaxane, wherein the polyrotaxane comprises a pseudopolyrotaxane, which has a linear molecule and a cyclic molecule (s) in which the linear molecule is included in a cavity (cavities) of the cyclic molecule(s) in a skewered manner, and capping groups, each of which locates at each end of the pseudopolyrotaxane in order to prevent the dissociation of the cyclic molecule(s), and a main chain backbone of said linear molecule consists essentially of -Si-O-, i.e., a backbone represented by the above formula X;
   the method comprising following steps a) and b), and the steps are performed in random order and thereafter the following step c) is provided;
   a) a step of preparing a pseudopolyrotaxane, wherein a main chain backbone of a linear molecule thereof consists essentially of a backbone represented by following formula X;
   b) a step of dissolving a capping group precursory compound, which forms the capping group, in a solvent to obtain a solution of the capping group precursory compound; and
   c) a step of adding the solution of the capping group precursory compound to the pseudopolyrotaxane to obtain a pseudopolyrotaxane dispersion, and thereafter reacting the pseudopolyrotaxane with the capping group precursory compound to obtain the polyrotaxane;
   wherein the solvent is capable of dissolving the capping group precursory compound and has low affinity with both of the linear molecule and the cyclic molecule: 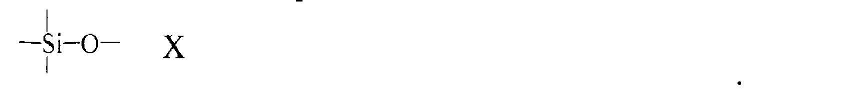
<15> In the above item <14>, the solvent may be selected from the group consisting of 1,4-dioxane, acetonitrile, acetone, tetrahydrofuran, diethyl ether, chloroform, dichloromethane and dimethylformamide, and mixed solvent thereof.
<16> In the above item <14> or <15>, the linear molecule of the pseudopolyrotaxane may be polydimethylsiloxane having at an end a group having an -NH₂ group; and
   the capping group precursory compound may be a compound represented by formula III'-1: 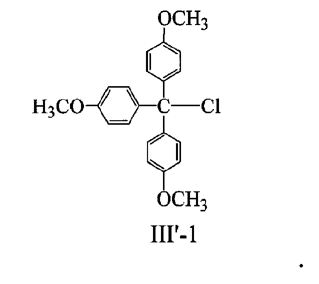
<17> In the above item <14> or <15>, the linear molecule of the pseudopolyrotaxane may be polydimethylsiloxane having at an end a group having a -COOH group; and
   the capping group precursory compound may be a compound represented by formula III'-2 or III'-3, wherein x represents an integer of 2 to 8, preferably 4 to 6: 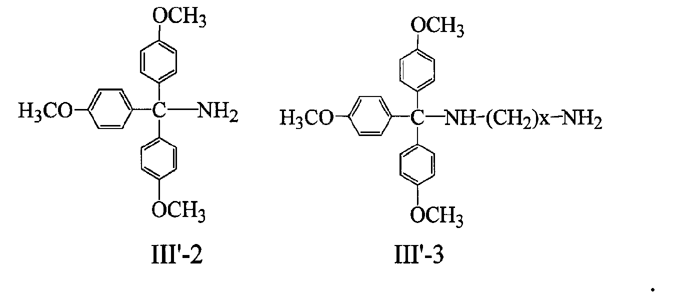
<18> In the above item <14> or <15>, the linear molecule of the pseudopolyrotaxane may be polydimethylsiloxane having at an end a group having a -COOH group;
   the polydimethylsiloxane may be reacted with an active ester group introductory compound to form polydimethylsiloxane having at an end a group having an active ester group;
   the resulting polydimethylsiloxane may be used as the linear molecule in the step a); and
   the capping group precursory compound may be a compound represented by the above formula III'-3, wherein x represents an integer of 2 to 8, preferably 4 to 6.
<19> In the above item <18>, the active ester group introductory compound may be one selected from the group consisting of the formulae V-1 to V-6; and
   the active ester group may be one selected from the group consisting of groups represented by the formulae IV-1 to IV-6 corresponding to the formulae V-1 to V-6, respectively: 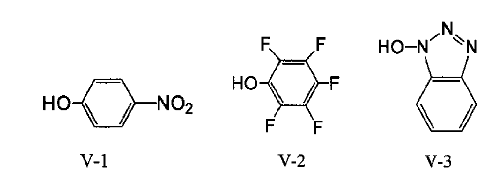 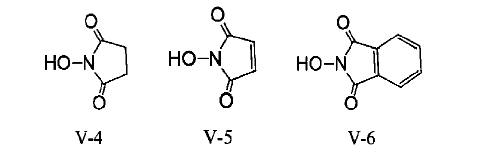 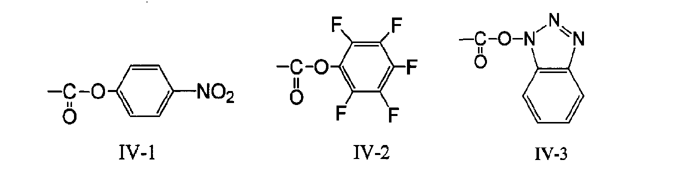 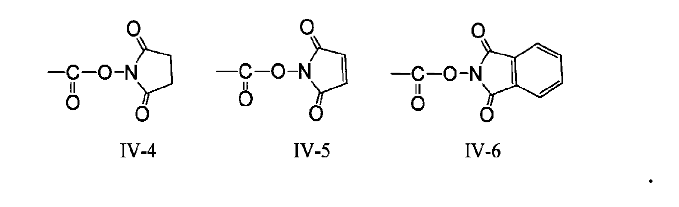
<20> In the above item <19>, the active ester group introductory compound may be a compound represented by the formula V-1 and the active ester group may be a group represented by the formula IV-1.
<21> In any one of the above items <14> to <20>, the linear molecule may consist essentially of a main chain backbone represented by the above formula I.
<22> In any one of the above items <14> to <21>, a molecular weight of the linear molecule may be 3, 000 or more, preferably 5,000 to 1,000,000, more preferably 10,000 to 500,000.
<23> In any one of the above items <14> to <22>, the capping group may be at least one selected from the group consisting of a group having a triphenylmethyl group (each phenyl group may be substituted), a group having a cyclodextrin derivative, a group having a silsesquioxane derivative, a group having a crown ether derivative, a group having a porphyrin derivative, a group having a phthalocyanine derivative, a group having a tetraphene derivative, a group having a chrysene derivative, a group having a rhodamine derivative, a group having a fluorescein derivative, and a group having a dendrimer. Prepefably, the capping group may be a group having a triphenylmethyl group (each phenyl group may be substituted).
<24> In the above item <23>, the group having a triphenylmethyl group may be a group represented by the above formula II. Furthermore, (R₁, R₂, R₃) in the formula II may be selected from the group consisting of (H, H, H), (CH₃, CH₃, CH₃), (OCH₃, OCH₃, OCH₃), (OCH₃, H, H), (OCH₃, OCH₃, H), (C(CH₃)₃, C(CH₃)₃, C(CH₃)₃), (C₆H₅, C₆H₅, C₆H₅), (O-CO-C₆H₅, O-CO-C₆H₅, O-CO-C₆H₅), and (N(CH₂CH₂OH)₂, N(CH₂CH₂OH)₂, N(CH₂CH₂OH)₂).
<25> In any one of the above items <14> to <24>, the cyclic molecule may be derived from γ-cyclodextrin, and the linear molecule may be polydimethylsiloxane. Further, the capping group may be the group having a triphenylmethyl group (each phenyl group may be substituted), in particular, a tri(4-methoxyphenyl)methyl group.
<26> In any one of the above items <23> to <25>, the group having the triphenylmethyl group (each phenyl group may be substituted) may be any one of groups represented by the above formulae III-1 to III-3, wherein x represents an integer of 2 to 8, preferably 4 to 6.
<27> In any one of the above items <14> to <26>, the linear molecule may have the cyclic molecule included in a skewered manner at an amount of 0.001 to 0.9, preferably 0.01 to 0.8, more preferably 0.05 to 0.6 of a maximum inclusion amount, which is defined as an amount at which the cyclic molecules can be included at maximum when the linear molecule has the cyclic molecules included in a skewered manner, and the amount at maximum is normalized to be 1.
<28> A crosslinked polyrotaxane comprising a first polymer and a first polyrotaxane, such that all or a part of the first polymer and all or a part of the first polyrotaxane are crosslinked through a chemical bond;
   wherein the first polyrotaxane comprises a first pseudopolyrotaxane, which has a first linear molecule and a first cyclic molecule (s) in which the first linear molecule is included in a cavity (cavities) of the first cyclic molecule (s) in a skewered manner, and first capping groups, each of which locates at each end of the first pseudopolyrotaxane in order to prevent the dissociation of the first cyclic molecule(s), and a main chain backbone of the first linear molecule consists essentially of -Si-O-, i.e., a backbone represented by the above formula X.
<29> In the above item <28>, the first polymer may be a second polyrotaxane;
   the second polyrotaxane comprises a second pseudopolyrotaxane, which has a second linear molecule and a second cyclic molecule (s) in which the second linear molecule is included in a cavity (cavities) of the second cyclic molecule(s) in a skewered manner, and second capping groups, each of which locates at each end of the second pseudopolyrotaxane in order to prevent the dissociation of the second cyclic molecule(s); and
   the first and second polyrotaxanes may be bonded through a chemical bond between the first and second cyclic molecules.
<30> In the above item <29>, a main chain backbone of the second linear molecule in the second polyrotaxane may consist essentially of -Si-O-, i.e., a backbone represented by the above formula X.
<31> In any one of the above items <28> to <30>, the first linear molecule may consist essentially of a main chain backbone represented by the above formula I. Further, the second linear molecule having a main chain backbone consisting essentially of -Si-O- may consist essentially of a main chain backbone represented by the above formula I.
<32> In any one of the above items <28> to <31>, a molecular weight of the first linear molecule may be 3,000 or more, preferably 5, 000 to 1, 000, 000, more preferably 10,000 to 500,000. Further, a molecular weight of the second linear molecule having a main chain backbone consisting essentially of -Si-O- may be 3,000 or more, preferably 5,000 to 1,000,000, more preferably 10,000 to 500,000.
<33> In any one of the above items <28> to <32>, the first and/or second capping group (s) may be at least one selected from the group consisting of a group having a triphenylmethyl group (each phenyl group may be substituted), a group having a cyclodextrin derivative, a group having a silsesquioxane derivative, a group having a crown ether derivative, a group having a porphyrin derivative, a group having a phthalocyanine derivative, a group having a tetraphene derivative, a group having a chrysene derivative, a group having a rhodamine derivative, a group having a fluorescein derivative, and a group having a dendrimer. Prepefably, the first and/or second capping group(s) may be a group having a triphenylmethyl group (each phenyl group may be substituted).
<34> In the above item <33>, the group having a triphenylmethyl group may be a group represented by the above formula II. Furthermore, (R₁, R₂, R₃) in the formula II may be selected from the group consisting of (H, H, H), (CH₃, CH₃, CH₃), (OCH₃, OCH₃, OCH₃), (OCH₃, H, H), (OCH₃, OCH₃, H), (C(CH₃)₃, C(CH₃)₃, C(CH₃)₃), (C₆H₅, C₆H₅, C₆H₅), (O-CO-C₆H₅, O-CO-C₆H₅, O-CO-C₆H₅), and (N(CH₂CH₂OH)₂, N(CH₂CH₂OH)₂, N(CH₂CH₂OH)₂).
<35> In any one of the above items <28> to <34>, the first cyclic molecule may be derived from γ-cyclodextrin, and the first linear molecule may be polydimethylsiloxane.
   Further, the second linear molecule having a main chain backbone consisting essentially of -Si-O- may be polydimethylsiloxane, and in the case, the second cyclic molecule may be derived from γ-cyclodextrin.
   More, the first capping group may be the group having a triphenylmethyl group (each phenyl group may be substituted), in particular, a tri(4-methoxyphenyl)methyl group. Further, in a case where the second linear molecule is polydimethylsiloxane, the second capping group may be the group having a triphenylmethyl group (each phenyl group may be substituted), in particular, a tri(4-methoxyphenyl)methyl group.
<36> In any one of the above items <28> to <35>, the first and/or second linear molecule(s) may be polydimethylsiloxane having at an end a group having an -NH₂ group, respectively.
<37> In any one of the above items <28> to <35>, the first and/or second linear molecule(s) may be polydimethylsiloxane having at an end a group having a -COOH group, respectively.
<38> In any one of the above items <28> to <35>, the first and/or second linear molecule(s) may be polydimethylsiloxane having at an end a group having an active ester group, respectively.
<39> In the above item <38>, the active ester group may be at least one selected from the group consisting of groups represented by the above formulae IV-1 to IV-6:
<40> In any one of the above items <33> to <39>, the group having the triphenylmethyl group (each phenyl group may be substituted) may be any one of groups represented by the above formulae III-1 to III-3, wherein x represents an integer of 2 to 8, preferably 4 to 6.
<41> In any one of the above items <28> to <40>, the first linear molecule may have the first cyclic molecule included in a skewered manner at an amount of 0.001 to 0.9, preferably 0.01 to 0.8, more preferably 0.05 to 0.6 of a maximum inclusion amount, which is defined as an amount at which the first cyclic molecules can be included at maximum when the first linear molecule has the first cyclic molecules included in a skewered manner, and the amount at maximum is normalized to be 1.
<42> A method for producing a crosslinked polyrotaxane comprising a first polymer and a first polyrotaxane, such that all or a part of the first polymer and all or a part of the first polyrotaxane are crosslinked through a chemical bond;
   wherein the first polyrotaxane comprises a first pseudopolyrotaxane, which has a first linear molecule and a first cyclic molecule (s) in which the first linear molecule is included in a cavity (cavities) of the first cyclic molecule (s) in a skewered manner, and first capping groups, each of which locates at each end of the first pseudopolyrotaxane in order to prevent the dissociation of the first cyclic molecule(s), wherein a main chain backbone of the first linear molecule consists essentially of -Si-O-, i.e., a backbone represented by the above formula X;
   the method comprising the steps of:
   A) preparing the first polyrotaxane; and
   B) crosslinking the first polyrotaxane and the first polymer by a chemical bond.
<43> In the above item <42>, the first polymer may be a second polyrotaxane;
   the second polyrotaxane comprises a second pseudopolyrotaxane, which has a second linear molecule and a second cyclic molecule (s) in which the second linear molecule is included in a cavity (cavities) of the second cyclic molecule(s) in a skewered manner, and second capping groups, each of which locates at each end of the second pseudopolyrotaxane in order to prevent the dissociation of the second cyclic molecule(s); and
   the first and second polyrotaxanes may be bonded through a chemical bond between said first and second cyclic molecules.
<44> In the above item <43>, the main chain backbone of the second linear molecule in the second polyrotaxane may consist essentially of -Si-O-, i.e., a backbone represented by the above formula X.
<45> In any one of the above items <42> to <44>, the first linear molecule may consist essentially of a main chain backbone represented by the above formula I. Further, the second linear molecule having a main chain backbone consisting essentially of -Si-O-, i.e., a backbone represented by the above formula X, may consist essentially of a main chain backbone represented by the above formula I.
<46> In any one of the above items <42> to <45>, a molecular weight of the first linear molecule may be 3,000 or more, preferably 5, 000 to 1, 000, 000, more preferably 10,000 to 500,000. Further, a molecular weight of the second linear molecule having a main chain backbone consisting essentially of -Si-O- may be 3,000 or more, preferably 5,000 to 1,000,000, more preferably 10,000 to 500,000.
<47> In any one of the above items <42> to <46>, the first and/or second capping group (s) may be at least one selected from the group consisting of a group having a triphenylmethyl group (each phenyl group may be substituted), a group having a cyclodextrin derivative, a group having a silsesquioxane derivative, a group having a crown ether derivative, a group having a porphyrin derivative, a group having a phthalocyanine derivative, a group having a tetraphene derivative, a group having a chrysene derivative, a group having a rhodamine derivative, a group having a fluorescein derivative, and a group having a dendrimer. Prepefably, the first and/or second capping group (s) may be a group having a triphenylmethyl group (each phenyl group may be substituted).
<48> In the above item <47>, the group having a triphenylmethyl group may be a group represented by the above formula II. Furthermore, (R₁, R₂, R₃) in the formula II may be selected from the group consisting of (H, H, H), (CH₃, CH₃, CH₃), (OCH₃, OCH₃, OCH₃), (OCH₃, H, H), (OCH₃, OCH₃, H), (C(CH₃)₃, C(CH₃)₃, C(CH₃)₃), (C₆H₅, C₆H₅, C₆H₅), (O-CO-C₆H₅, O-CO-C₆H₅, O-CO-C₆H₅), and (N(CH₂CH₂OH)₂, N(CH₂CH₂OH)₂, N(CH₂CH₂OH)₂).
<49> In any one of the above items <42> to <48>, the first cyclic molecule may be derived from γ-cyclodextrin, and the first linear molecule may be polydimethylsiloxane.
   Further, the second linear molecule having a main chain backbone consisting essentially of -Si-O- may be polydimethylsiloxane, and in the case, the second cyclic molecule may be derived from γ-cyclodextrin.
   More, the first capping group may be the group having a triphenylmethyl group (each phenyl group may be substituted), in particular, a tri(4-methoxyphenyl)methyl group. Further, in a case where the second linear molecule is polydimethylsiloxane, the second capping group may be the group having a triphenylmethyl group (each phenyl group may be substituted), in particular, a tri(4-methoxyphenyl)methyl group.
<50> In any one of the above items <47> to <49>, the group having the triphenylmethyl group (each phenyl group may be substituted) may be any one of groups represented by the above formulae III-1 to III-3, wherein x represents an integer of 2 to 8, preferably 4 to 6.
<51> In any one of the above items <42> to <50>, the first and/or second linear molecule(s) in the first and/or second pseudopolyrotaxane (s) may be polydimethylsiloxane having at an end a group having an -NH₂ group, and
   the first and/or second capping group precursory compound(s) may be a compound represented by the above formula III'-1.
<52> In any one of the above items <42> to <50>, the first and/or second linear molecule(s) in the first and/or second pseudopolyrotaxane (s) may be polydimethylsiloxane having at an end a group having a -COOH group; and
   the first and/or second capping group precursory compound(s) may be a compound represented by formula III'-2 or III'-3, wherein x represents an integer of 2 to 8, preferably 4 to 6.
<53> In any one of the above items <42> to <50>, the first and/or second linear molecule(s) in the first and/or second pseudopolyrotaxane (s) may be polydimethylsiloxane having at an end a group having a -COOH group;
   the polydimethylsiloxane may be reacted with an active ester group introductory compound to form polydimethylsiloxane having at an end a group having an active ester group;
   the resulting polydimethylsiloxane may be used as the linear molecule in the step a); and
   the capping group precursory compound may be a compound represented by the above formula III'-3, wherein x represents an integer of 2 to 8, preferably 4 to 6.
<54> In the above item <53>, the active ester group introductory compound may be one selected from the group consisting of the above formulae V-1 to V-6; and
   the active ester group may be one selected from the group consisting of groups represented by the above formulae IV-1 to IV-6 corresponding to the formulae V-1 to V-6, respectively.
<55> In the above item <54>, the active ester group introductory compound may be a compound represented by the above formula V-1 and the active ester group may be a group represented by the above formula IV-1.
<56> In any one of the above items <42> to <55>, the first linear molecule may have the first cyclic molecule included in a skewered manner at an amount of 0.001 to 0.9, preferably 0.01 to 0.8, more preferably 0.05 to 0.6 of a maximum inclusion amount, which is defined as an amount at which the first cyclic molecules can be included at maximum when the first linear molecule has the first cyclic molecules included in a skewered manner, and the amount at maximum is normalized to be 1.

### Effects of the Invention

The present invention can provide an undeveloped polyrotaxane having a main chain backbone consisting essentially of -Si-O-, and a method for producing the polyrotaxane.

Also, the present invention can provide a polyrotaxane having stretchability and/or viscoelasticity as well as oxygen permeability, heat resistance, chemical resistance, environmental resistance and/or durability, and a method for producing the polyrotaxane.

Further, other than or in addition to the above-mentioned effects, the present invention can provide a crosslinked polyrotaxane obtained by crosslinking the polyrotaxane with another polymer and/or polyrotaxane through a chemical bond, and a method for producing the crosslinked polyrotaxane.

### Best Mode for Carrying out the Invention

The present invention will be described in detail hereinafter.

### <Polyrotaxane having a main chain backbone of a linear molecule being -Si-O->

The present invention discloses a polyrotaxane such that a main chain backbone of a linear molecule is a backbone represented by following formula X (hereinafter, the backbone is occasionally abbreviated herein as "-Si-O-"). That is to say, the present invention discloses a polyrotaxane comprising a pseudopolyrotaxane, which has a linear molecule and a cyclic molecule (s) in which the linear molecule is included in a cavity (cavities) of the cyclic molecule (s) in a skewered manner, and capping groups, each of which locates at each end of the pseudopolyrotaxane in order to prevent the dissociation of the cyclic molecule(s), in which a main chain backbone of the linear molecule consists essentially of -Si-O-.

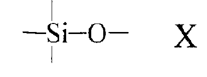

### «Linear molecule»

In a polyrotaxane according to the present invention, a main chain backbone of the linear molecule consists essentially of -Si-O-. Here, "a main chain backbone consists essentially of -Si-O-" means that the main chain backbone may have a group except -Si-O- at an end. Examples of a group except -Si-O-existing at the end may include a group for linking the after-mentioned capping group to an -Si-O- main chain backbone.

The linear molecule may consist essentially of a main chain backbone represented by following formula I. Furthermore, n is an integer determined by depending on molecular weight of the after-mentioned linear molecule.

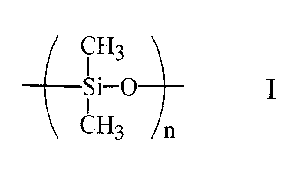

The molecular weight of the linear molecule may be 3, 000 or more, preferably 5, 000 to 1,000,000, more preferably 10,000 to 500,000.

More preferable examples of the linear molecule may include, but are not limited to, amino-terminated polydimethylsiloxane (such as -Si-CH₂-CH₂-CH₂-NH₂ at an end), carboxyl-terminated polydimethylsiloxane (such as -Si-CH₂-CH₂-CH₂-COOH at an end), epoxy-terminated polydimethylsiloxane, thiol-terminated polydimethylsiloxane (such as -Si-CH₂-CH₂-CH₂-SH at an end), alkyl halide-terminated polydimethylsiloxane (such as -Si-CH₂-CH₂-CH₂-Cl at an end) and polydimethylsiloxane having an active ester group at an end.

Examples of the active ester group may include an ester group having high reactivity with a nucleophilic agent such as amine, in particular, an ester group such that the active ester group has an electron-withdrawing group. Examples thereof may include, but are not limited to, groups represented by following formulae IV-1 to IV-6.

Furthermore, the active ester group may be obtained, for example, by further actively esterifying a carboxyl end of the above-mentioned carboxyl-terminated polydimethylsiloxane.

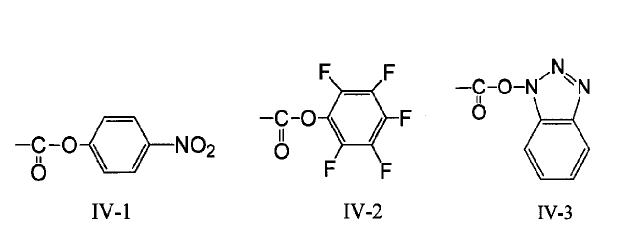

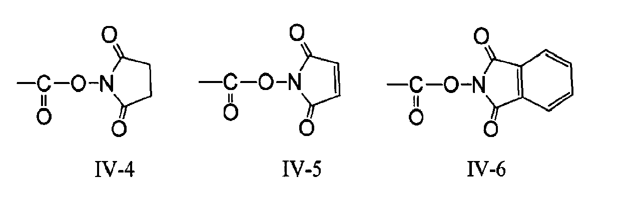

### «Cyclic molecule»

In a polyrotaxane according to the present invention, the linear molecule is included in a cavity (cavities) of the cyclic molecule(s). Accordingly, in the present invention, the cavity of the cyclic molecule may have a sufficient diameter to include the linear molecule.

The cyclic molecule is not particularly limited if it is a cyclic molecule having the cavity with the diameter. The cyclic molecule may be γ-cyclodextrin or a derivative thereof (simply referred to herein as "derived from γ-cyclodextrin" or "a molecule derived from γ-cyclodextrin"), such as 6-methoxy-γ-cyclodextrin.

In particular, in a case where the linear molecule is polydimethylsiloxane, the cyclic molecule may be derived from γ-cyclodextrin.

### «Capping group»

In a polyrotaxane according to the present invention, capping groups, each locates at each end of the pseudopolyrotaxane in order to prevent the dissociation of the cyclic molecule(s). Accordingly, the capping groups are not particularly limited if they prevent the dissociation of the cyclic molecule(s) from an inclusion state.

With regard to the capping groups, as described above, form and shape thereof are not particularly limited if they prevent the dissociation of the cyclic molecule(s) from an inclusion state, and may be planar, globular or branched.

Examples of the capping groups may be at least one selected from the group consisting of a group having a triphenylmethyl group (each phenyl group may be substituted), a group having a cyclodextrin derivative, a group having a silsesquioxane derivative, a group having a crown ether derivative, a group having a porphyrin derivative, a group having a phthalocyanine derivative, a group having a tetraphene derivative, a group having a chrysene derivative, a group having a rhodamine derivative, a group having a fluorescein derivative, and a group having a dendrimer.

In one polyrotaxane molecule, the capping groups each located at each ends may be the same or different. A polyrotaxane having the same capping groups located at each ends is easily produced.

More specific examples of the capping groups may include a triphenylmethyl group (D-1) or a group having it, a cyclodextrin group (D-2) or a group having it, a silsesquioxane group (D-3) or a group having it, a porphyrin group (D-4) or a group having it, a phthalocyanine group (D-5) or a group having it, a tetraphene group (D-6 or D-7) or a group having it, a chrysene group (D-8) or a group having it, a rhodamine group (D-9) or a group having it, a fluorescein group (D-10) or a group having it, a dendrimer group (D-11) or a group having it, and the like. Furthermore, D-1 and D-6 to D-8 disclose a group for bonding to the linear molecule, while D-2 to D-5 and D-9 to D-11 do not disclose a group for bonding to the linear molecule. The D-2 to D-5 and D-9 to D-11 exhibit a function as the capping groups even though a group for bonding to the linear molecule is arranged in any position.

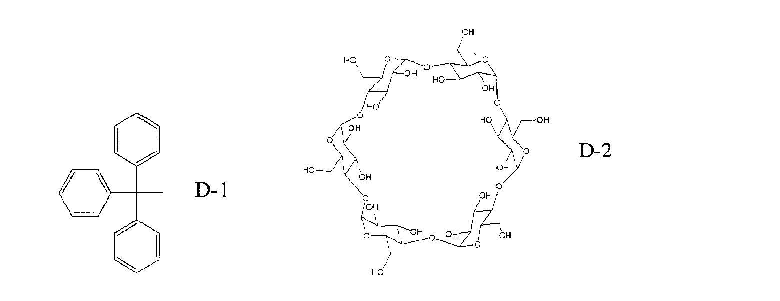

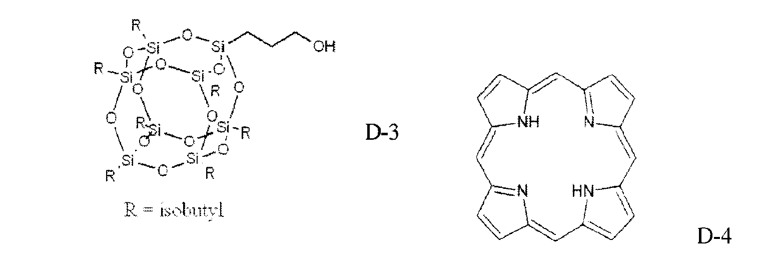

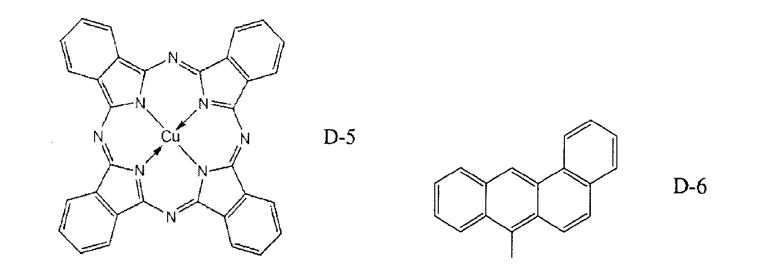

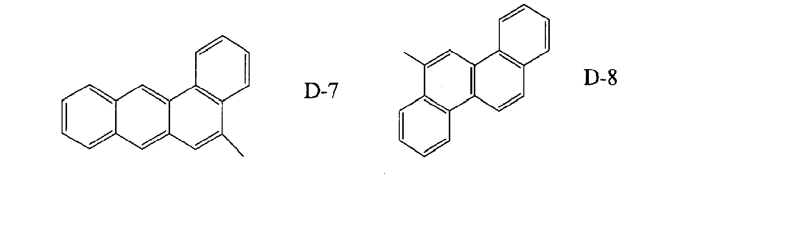

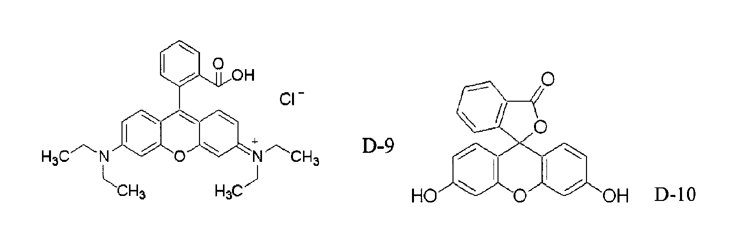

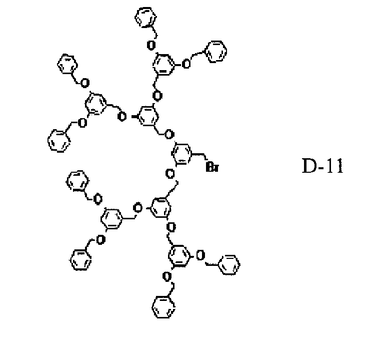

"A triphenylmethyl group" in a group having a triphenylmethyl group may be a group represented by following formula II. In the formula II, (R₁, R₂, R₃) may be selected from the group consisting of (H, H, H), (CH₃, CH₃, CH₃), (OCH₃, OCH₃, OCH₃), (OCH₃, H, H), (OCH₃, OCH₃, H), (C(CH₃)₃, C(CH₃)₃, C(CH₃)₃), (C₆H₅, C₆H₅, C₆H₅), (O-CO-C₆H₅, C-CO-C₆H₅, O-CO-C₆H₅), and (N(CH₂CH₂OH)₂, N(CH₂CH₂OH)₂, N(CH₂CH₂OH)₂).

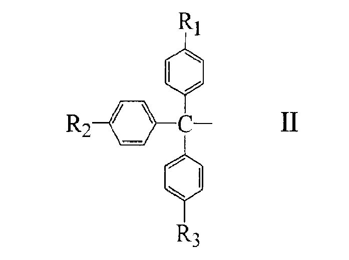

In particular, "a triphenylmethyl group" may be one of groups represented by following formulae III-1 to III-3.

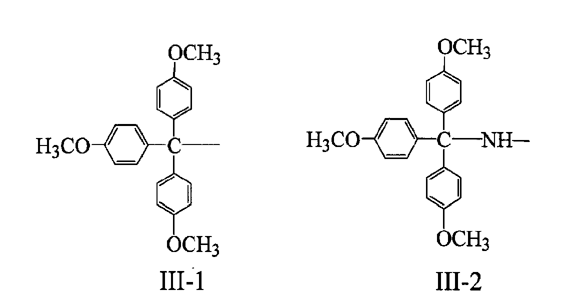

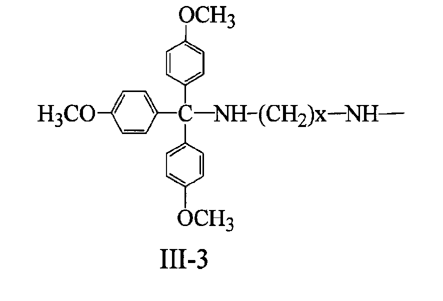

### «Inclusion amount»

In a polyrotaxane according to the present invention, the linear molecule may have the cyclic molecules included in a skewered manner at an amount of 0.001 to 0.9, preferably 0.01 to 0.8, more preferably 0.05 to 0.6 of a maximum inclusion amount, which is defined as an amount at which the cyclic molecules can be included at maximum when the linear molecule has the cyclic molecules included in a skewered manner, and the amount at maximum is normalized to be 1.

The maximum inclusion amount of a cyclic molecule can be determined depending on the length of a linear molecule and the thickness of a cyclic molecule. For example, when the linear molecule is polyethylene glycol and the cyclic molecule is an α-cyclodextrin molecule, the maximum inclusion amount is measured empirically (see, Macromolecules 1993, 26, 5698-5703, whole contents of which are incorporated herein by reference) . In a case where the linear molecule is polydimethylsiloxane and the cyclic molecule is γ-cyclodextrin, the maximum inclusion amount is experimentally measured (see, Macromolecules 33, 4397 (2000), whole contents of which are incorporated herein by reference).

The present invention also provides materials comprising the above-mentioned polyrotaxane. These materials may have the characteristics of a polyrotaxane according to the present invention together. For example, these materials may have stretchability and/or viscoelasticity as well as oxygen permeability, heat resistance, chemical resistance, water repellency, environmental resistance and/or durability. A polyrotaxane according to the present invention may be used for the materials to be expected to have these characteristics.

### <Method for producing a polyrotaxane>

The above-mentioned polyrotaxane may be produced by, for example, following method:

The polyrotaxane may be produced by a method comprising the steps of:
a) preparing a pseudopolyrotaxane such that a main chain backbone of a linear molecule thereof consists essentially of -Si-O-;
b) dissolving a capping group precursory compound, which forms a capping group in a solvent to obtain a solution of the capping group precursory compound; and
c) adding the solution of the capping group precursory compound to the pseudopolyrotaxane to obtain a pseudopolyrotaxane dispersion, and thereafter reacting the pseudopolyrotaxane with the capping group precursory compound to obtain the polyrotaxane;
in which the solvent is capable of dissolving the capping group precursory compound and has low affinity with both of the linear molecule and a cyclic molecule.

The terms "linear molecule", "cyclic molecule" and "capping group" have the same meanings as described above. The steps a) and b) may be performed in random order. That is, the step b) may be provided after the step a), or the step a) may be provided after the step b).

In the present application, the term "pseudopolyrotaxane" means a compound such that a linear molecule is included in cavity(s) of a cyclic molecule(s) in a skewering manner. In other words, the term "pseudopolyrotaxane" means a compound such as not to be capped with a capping group(s).

The step a) is a step of preparing a pseudopolyrotaxane such that a main chain backbone of a linear molecule thereof consists essentially of -Si-O-. This step may be performed in accordance with Macromolecules 33, 4397(2000) or Macromolecules 34, 6338(2001).

While preparing an aqueous solution of a cyclic molecule (γ-cyclodextrin), a linear molecule whose main chain backbone consists essentially of -Si-O- is prepared, and the aqueous solution of a cyclic molecule is added to the linear molecule with stirring by ultrasonic waves, and further stirred by ultrasonic waves. Thereafter, the solution may stand still and be freeze-dried, thereby to prepare a pseudopolyrotaxane.

As described above, examples of the linear molecule to be used may include polydimethylsiloxane having at an end at least one selected from the group consisting of a group having an -NH₂ group, a group having a -COOH group, a group having an epoxy group, a group having a thiol group, a group having an alkyl halide group, and a group having an active ester group.

Among them, polydimethylsiloxane having at an end a group having an active ester group may be obtained in the following manner:
Polydimethylsiloxane having at an end a group having a -COOH group may be first prepared and subsequently reacted with an active ester group introductory compound to obtain polydimethylsiloxane having at an end a group having an active ester group.

More specifically, a compound represented by any one of the formulae V-1 to V-6 is prepared as the active ester group introductory compound. Any one of them may be reacted with polydimethylsiloxane having at an end a group having a -COOH group to obtain polydimethylsiloxane having at an end a group represented by any one of the formulae IV-1 to IV-6. A pseudopolyrotaxane having the polydimethylsiloxane as the linear molecule may be prepared as described above.

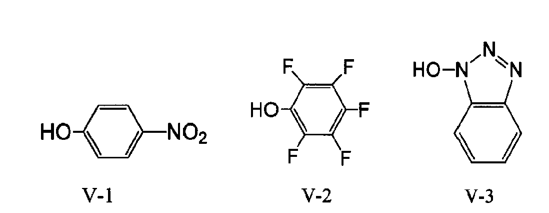

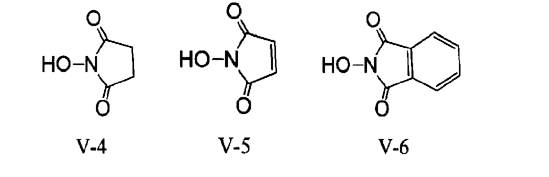

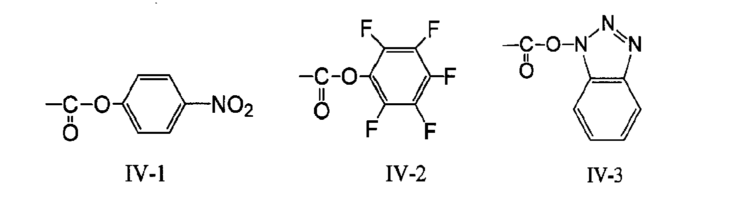

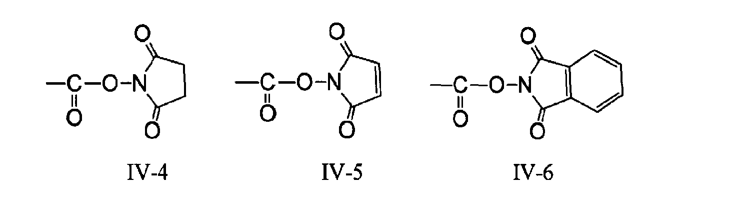

The step b) is a step of obtaining a capping group precursory compound solution.

This step is a step of dissolving a capping group precursory compound, which forms a capping group in a solvent. The solvent used herein is used as a solvent also in the step c) described below. The solvent is described in detail in the step c).

The capping group precursory compound is a compound which reacts with an end of the linear molecule to become the above-mentioned capping group.

Specifically, the capping group precursory compound has the above-mentioned capping group as a partial group thereof. Specifically, examples of the capping group precursory compound may include, but are not limited to, a compound of following formula III:

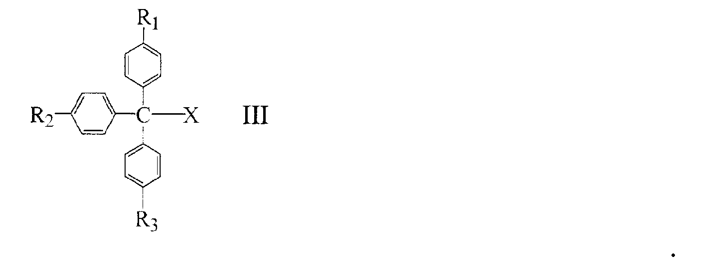

In the formula III, R₁ to R₃ have the same definition as the formula II, and X represents -Cl, -Br, -N=C=O, -NH-(CH₂)ₐ-N=C=O, -N=C=S, -NH-(CH₂)_{b}-N=C=S, -NH₂, -NH-(CH₂)_{c}-COOH, -NH-(CH₂)ₓ-NH₂, wherein a to c and x each represents an integer of 2 to 8; preferably, x represents an integer of 4 to 6, or C₆H₄-NH₂- In particular, in the formula III, examples of a combination of (R₁, R₂, R₃, X) may include, but are not limited to, (H, H, H, Cl), (OCH₃, OCH₃, OCH₃, Cl), (C(CH₃)₃, C(CH₃)₃, C(CH₃)₃, Cl), (O-CO-C₆H₅, O-CO-C₆H₅, O-CO-C₆H₅, Br), (OCH₃, H, H, Cl), (OCH₃, OCH₃, H, Cl), (N(CH₂CH₂OH)₂, N(CH₂CH₂OH)₂, N(CH₂CH₂OH)₂, Cl), (H, H, H, N=C=O), (H, H, H, N=C=S), (H, H, H, NH₂), (CH₃, CH₃, CH₃, NH₂), (C₆H₅, C₆H₅, C₆H_{5,} NH₂), (C₆H₅, C₆H₅, C₆H₅, NHCH₂COOH) and (H, H, H, C₆H₄-NH₂).

In a case where amino-terminated polydimethylsiloxane (such as -Si-CH₂-CH₂-CH₂-NH₂ at an end) is used as the linear molecule, a combination of (R₁, R₂, R₃, X) in the formula III may be (H, H, H, Cl), (OCH₃, OCH₃, OCH₃, Cl), (C(CH₃)₃, C(CH₃)₃, C(CH₃)₃, Cl), (O-CO-C₆H₅, O-CO-C₆H₅, O-CO-C₆H₅, Br), (OCH₃, H, H, Cl), (OCH₃, OCH₃, H, Cl), (N(CH₂CH₂OH)₂, N(CH₂CH₂OH)₂, N(CH₂CH₂OH)₂, Cl), (C₆H₅, C₆H₅, C₆H₅, NHCH₂COOH), (H, H, H, N=C=O), (H, H, H, N=C=S), or the like. In a case where carboxyl-terminated polydimethylsiloxane (such as -Si-CH₂-CH₂-CH₂-COOH at an end) is used as the linear molecule, a combination of (R₁, R₂, R₃, X) in the formula III may be (H, H, H, NH₂), (CH₃, CH₃, CH₃, NH₂), (C₆H₅, C₆H₅, C₆H₅, NH₂), (OCH₃, OCH₃, OCH₃, NH₂), (OCH₃, OCH₃, OCH₃, -NH-(CH₂)ₓ-NH₂ (x has the same definition as described above)), (H, H, H, C₆H₄-NH₂) or the like. In addition, in a case where polydimethylsiloxane having at an end a group having an active ester group is used as the linear molecule, a combination of (R₁, R₂, R₃, X) in the formula III may be (OCH₃, OCH₃, OCH₃, -NH-(CH₂)ₓ-NH₂ (x has the same definition as described above)), or the like.

The step c) is a step of adding the capping group precursory compound solution obtained in the step b) to the pseudopolyrotaxane to obtain a pseudopolyrotaxane dispersion, and thereafter reacting the pseudopolyrotaxane with the capping group precursory compound, to obtain a polyrotaxane.

The solvent in the step b) is directly used as a solvent in the step c). "Solvent" described herein is capable of dissolving the capping group precursory compound, has low affinity with both of the linear molecule and the cyclic molecule, and is a dispersion medium for the pseudopolyrotaxane. Accordingly, the pseudopolyrotaxane forms a dispersion in the solvent (dispersion medium). Here, "capable of dissolving" of "a solvent capable of dissolving the capping group precursory compound" means that the solubility is sufficient to dissolve the capping group precursory compound used for the reaction, as described above. "Low affinity with both of the linear molecule and the cyclic molecule" means that the solvent does not completely dissolve the pseudopolyrotaxane used for the reaction but has affinity for obtaining a dispersion thereof, as described above.

The solvent may be capable of dissolving the capping group precursory compound and may have low affinity with both of the linear molecule and the cyclic molecule, as described above. The use of such a solvent allows the capping group precursory compound existing uniformly in the solvent and the pseudopolyrotaxane existing heterogeneously in the solvent to react to form a polyrotaxane.

Examples of the solvent, depending on characteristics and/or amount of the capping group precursory compound to be used, and/or characteristics and/or amount of the pseudopolyrotaxane to be used may include, for example, 1,4-dioxane, acetonitrile, acetone, tetrahydrofuran, diethyl ether, chloroform, dichloromethane and dimethylformamide, and mixed solvent thereof.

### <Crosslinked polyrotaxane>

The present invention also provides a crosslinked polyrotaxane (hereinafter, occasionally abbreviated simply as "chemical crosslinked PR") having a first polymer and the above-mentioned polyrotaxane (a first polyrotaxane), such that all or a part of the first polymer and all or a part of the first polyrotaxane are crosslinked through a chemical bond.

The chemical crosslinked PR is roughly categorized into two kinds while depending on the first polymer: i) the case where the first polymer is a polyrotaxane and ii) the case where the first polymer is a general polymer other than a polyrotaxane (hereinafter, abbreviated as "a general polymer"). The case i) where the other polymer is a polyrotaxane has two kinds such that a) the case where the polyrotaxane is a polyrotaxane according to the present invention (a polyrotaxane whose main chain backbone consists essentially of -Si-O-) and b) the case where the polyrotaxane is except a polyrotaxane of the present invention (a polyrotaxane whose main chain backbone consists essentially of one other than -Si-O-).

The present invention may provide both the above-mentioned i) and ii) (also two kinds of the case of ii).

Thus, the present invention provides a crosslinked body of the first polyrotaxane (a polyrotaxane whose main chain backbone consists essentially of -Si-O-) and various polymers, and thereby may provide a material having desired characteristics without deteriorating both characteristics of various polymers and characteristics of the first polyrotaxane, being expected for various applications.

### <General polymer>

In the chemical crosslinked PR according to the present invention, at least a part of the general polymers may be crosslinked with a polyrotaxane according to the present invention. In particular, at least a part of the general polymers may be crosslinked with a polyrotaxane according to the present invention to crosslink by bonding through a cyclic molecule of the polyrotaxane according to the present invention. When crosslinking is formed through a cyclic molecule, the cyclic molecule is able to move along a linear molecule, thereby various characteristics of the chemically crosslinked PR are imparted.

At least a part of the general polymers may be physically and/or chemically crosslinked.

The weight ratio of the polyrotaxane to the general polymer ((polyrotaxane)/(general polymer)) may be 1/1000 or more, preferably 1/100 or more, more preferably 1/10.

The general polymer is not limited, and may have on a backbone chain or side chain at least one selected from the group consisting of a -OH group, a -NH₂ group, a -COOH group, an epoxy group, a vinyl group, a thiol group and a photo-crosslinkable group. The photo-crosslinkable group may include, but is not limited to, cinnamic acid, coumarin, chalcone, anthracene, styrylpyridine, styrylpyridinium salt, styrylquinolium salt and the like.

The general polymer may be a homopolymer or a copolymer. Two or more polymers may be present. In a case where two or more polymers are present, at least one polymer may be bound to a polyrotaxane through a cyclic molecule. In a case where the polymer of a material according to the present invention is a copolymer, it may be composed of two, or three or more monomers. In the case of a copolymer, the copolymer may be one of a block copolymer, an alternating copolymer, a random copolymer, a graft copolymer and the like.

Examples of the general polymer may include, but are not limited to, polyvinyl alcohol, polyvinylpyrrolidone, poly(meth)acrylic acid, cellulose-based resins (carboxymethylcellulose, hydroxyethylcellulose, hydroxypropylcellulose and the like), polyacrylamide, polyethylene oxide, polyethylene glycol, polypropylene glycol, polyvinyl acetal-based resins, polyvinyl methyl ether, polyamine, polyethyleneimine, casein, gelatin, starch and the like and/or copolymers thereof, polyolefin-based resins such as polyethylene, polypropylene, and copolymer resins with other olefinic monomers, polyester resins, polyvinyl chloride resins, polystyrene-based resins such as polystyrene, acrylonitrile-styrene copolymer resin and the like, acrylic resins such as polymethyl methacrylate, copolymer of (meth) acrylate, acrylonitrile-methyl acrylate copolymer resin and the like, polycarbonate resins, polyurethane resins, vinyl chloride-vinyl acetate copolymer resin, polyvinylbutyral resin and the like; and derivatives and modifications thereof, polyisobutylene, polytetrahydrofuran, polyaniline, acrylonitrile-butadiene-styrene copolymer (ABS resin), polyamides such as nylon and the like, polyimides, polydienes such as polyisoprene, polybutadiene and the like, polysiloxanes such as polydimethylsiloxane and the like, polysulfones, polyimines, polyacetic anhydrides, polyureas, polysulfides, polyphosphazenes, polyketones, polyphenylenes, polyhaloolefins, and derivatives thereof. The derivatives may contain the above-described group, i.e., at least one selected from the group consisting of a -OH group, a -NH₂ group, a -COOH group, an epoxy group, a vinyl group, a thiol group and a photo-crosslinkable group.

### <Method for producing a crosslinked polyrotaxane>

The above-mentioned crosslinked polyrotaxane may be produced by, for example, following method:

The above-mentioned crosslinked polyrotaxane may be produced by the method comprising the steps of:
A) preparing a first polyrotaxane; and
B) crosslinking the first polyrotaxane and a first polymer by a chemical bond.

The step A) is a method for producing the above-mentioned polyrotaxane, having the steps a) to c) in detail.

The step B) is a step of crosslinking the polyrotaxane obtained in the step A) and a first polymer by a chemical bond.

The crosslinking step, depending on the first polymer to be used and the first polyrotaxane to be used (such as the length of the linear molecule (molecular weight) and the capping group), may be performed by G) crosslinking reaction by adding a crosslinking agent, or H) photo-crosslinking reaction by performing photoirradiation for a photoreactive group contained in the first polyrotaxane.

In the case of G) crosslinking reaction by adding a crosslinking agent, examples of the crosslinking agent may include, but are not limited to, cyanuric chloride, trimesoyl chloride, terephthaloyl chloride, epichlorohydrin, dibromobenzene, glutaraldehyde, aliphatic polyfunctional isocyanate, aromatic polyfunctional isocyanate, tolyleyne diisocyanate, hexamethylene diisocyanate, divinylsulfone, 1,1'-carbonyldiimidazole, alkoxysilanes and derivatives thereof.

In the case of H) photo-crosslinking reaction, when the polyrotaxane has a functional group of the formula II-6 and a photoreactive group of the functional group is an unsaturated bonding group, photo-crosslinking reaction is initiated by photoirradiation and an initiator to cause bonding between the unsaturated bonding groups. In this case, the initiator may exist in the reaction field. When the photoreactive group is a photosensitive group, photo-crosslinking reaction is initiated by photoirradiation without using the initiator to cause bonding between the photosensitive groups.

The reaction initiator may be at least one selected from the group consisting of quinones, aromatic ketones, benzoin, benzoin ethers, biimidazole compounds and derivatives thereof, N-phenylglycines, combinations of thioxanthones and alkylaminobenzoic acid, combinations of biimidazole compounds and derivatives thereof and Michler's ketones, acridines, and oxime esters. Specifically, the reaction initiator may be quinones such as 2-ethylanthraquinone, octaethylanthraquinone, 1,2-benzanthraquinone, 2,3-benzanthraquinone, 2-phenylanthraquinone, 2,3-diphenylanthraquinone, 1-chloroanthraquinone, 1,4-naphthoquinone, 9,10-phenanthraquinone, 2-methyl-1,4-naphthoquinone, 2,3-dimethylanthraquinone, 3-chloro-2-methylanthraquinone and the like; aromatic ketones such as benzophenone, Michler's ketone[4,4'-bis(dimethylamino)benzophenone], 4,4'-bis(diethylamino)benzophenone and the like; benzoin ethers such as benzoin, benzoinethyl ether, benzoinphenyl ether, methylbenzoin, ethylbenzoin and the like; biimidazole compounds and derivatives thereof such as benzyldimethyl ketal, benzyldiethyl ketal, triarylimidazolyl dimers and the like; N-phenylglycines such as N-phenylglycine, N-methyl-N-phenylglycine, N-ethyl-N-phenylglycine and the like; combinations of thioxanthones and alkylamine benzoic acid such as a combination of ethylthioxanthone and ethyl dimethylaminobenzoate, a combination of 2-chlorothioxanthone and ethyl dimethylaminobenzoate, a combination of isopropylthioxanthone and ethyl dimethylbenzoate, and the like; combinations of biimidazole compounds such as triarylimidazolyl dimers and derivatives thereof and Michler's ketone; acridines such as 9-phenylacridine and the like; and oxime esters such as 1-phenyl-1,2-propanedione-2-o-benzoineoxime, 1-phenyl-1,2-propanedione-2-(o-ethoxycarbonyl)oxime and the like. Preferably, the reaction initiator may be thioxanthones such as diethylthioxanthone, chlorothioxanthone and the like; dialkylaminobenzoate esters such as ethyl dimethylaminobenzoate and the like; benzophenone, 4,4'-bis(dimethylamino)benzophenone, 4,4'-bis(diethylamino)benzophenone; biimidazole compounds such as triarylimidazolyl dimers and derivatives thereof; 9-phenylacridine, N-phenylglycines; and combinations thereof. Furthermore, the biimidazole compounds such as triarylimidazolyl dimers and derivatives thereof may include, for example, 2-(o-chlorophenyl)-4,5-diphenylimidazolyl dimers, 2,2',5-tris-(o-chlorophenyl)-4-(3,4-dimethoxyphenyl)-4',5'-diphenylimidazolyl dimers, 2,4-bis-(o-chlorophenyl)-5-(3,4-dimethoxyphenyl)-diphenylim idazolyl dimers, 2,4,5-tris-(o-chlorophenyl)-diphenylimidazolyl dimers, 2-(o-chlorophenyl)-bis-4,5-(3,4-dimethoxyphenyl)-imidazolyl dimers, 2,2'-bis-(2-fluorophenyl)-4,4',5,5'-tetrakis-(3-methoxyphen yl)-imidazolyl dimers, 2,2'-bis-(2,3-difluoromethylphenyl)-4,4',5,5'-tetrakis-(3-m ethoxyphenyl)-imidazolyl dimers, 2,2'-bis-(2,4-difluorophenyl)-4,4',5,5'-tetrakis-(3-methoxy phenyl)-imidazolyl dimers, 2,2'-bis-(2,5-difluorophenyl)-4,4',5,5'-tetrakis-(3-methoxy phenyl)-imidazolyl dimers, 2,2'-bis-(2,6-difluorophenyl)-4,4',5,5'-tetrakis-(3-methoxy phenyl)-imidazolyl dimers, 2,2'-bis-(2,3,4-trifluorophenyl)-4,4',5,5'-tetrakis-(3-meth oxyphenyl)-imidazolyl dimers, 2,2'-bis-(2,3,5-trifluorophenyl)-4,4',5,5'-tetrakis-(3-meth oxyphenyl)-imidazolyl dimers, 2,2'-bis-(2,3,6-trifluorophenyl)-4,4',5,5'-tetrakis-(3-meth oxyphenyl)-imidazolyl dimers, 2,2'-bis-(2,4,5-trifluorophenyl)-4,4',5,5'-tetrakis-(3-meth oxyphenyl)-imidazolyl dimers, 2,2'-bis-(2,4,6-trifluorophenyl)-4,4',5,5'-tetrakis-(3-meth oxyphenyl)-imidazolyl dimers, 2,2'-bis-(2,3,4,5-tetrafluorophenyl)-4,4',5,5'-tetrakis-(3-methoxyphenyl)-imidazolyl dimers, 2,2'-bis-(2,3,4,6-tetrafluorophenyl)-4,4',5,5'-tetrakis-(3-methoxyphenyl)-imidazolyl dimers, 2,2'-bis-(2,3,4,5,6-pentafluorophenyl)-4,4',5,5'-tetrakis-( 3-methoxyphenyl)-imidazolyl dimers, and the like.

The present invention will be illustrated more specifically by way of following Examples, but is not limited thereby.

### Example 1:

### <Preparation of pseudopolyrotaxane A-1>

6 g of γ-cyclodextrin (hereinafter, occasionally abbreviated simply as "γ-CD") was taken in a 200 ml recovery flask and 20 mL of ion-exchange water was added thereto and dissolved.

420 mg of bis(3-aminopropyl)-terminated poly(dimethylsiloxane) (hereinafter, occasionally abbreviated simply as "PDMSm") (average molecular weight: 26,000) was measured up in another 200 ml flask. The above-mentioned γ-CD aqueous solution was added to the flask at a time while applying ultrasonic waves, and further stirred for 30 minutes while applying ultrasonic waves. Thereafter, the solution stood still at room temperature (25°C) for 3 days to obtain white suspension. The resulting suspension was well stirred again, evenly frozen by liquid nitrogen and thereafter freeze-dried for 2 days to obtain a pseudopolyrotaxane A-1.

### <Preparation of polyrotaxane B-1>

250 mg of 4,4',4"-trimethoxytrityl chloride (hereinafter, abbreviated simply as "TMTC") was taken in a 50 ml recovery flask under argon atmosphere, and 2 mL of dehydrated 1,4-dioxane was further added thereto to dissolve TMTC.

250 mg of the pseudopolyrotaxane A-1 obtained in the above was separately taken in a glass vessel under argon atmosphere, and the TMTC solution was added to the vessel at a time. Immediately thereafter, 0.07 mL of triethylamine (hereinafter, occasionally abbreviated simply as "TEA") was dropped thereinto and stood still at room temperature (25°C) for 24 hours without stirring. The pseudopolyrotaxane was not dissolved in 1,4-dioxane and the reaction was performed in a heterogeneous system.

After the reaction, the heterogeneous reaction solution was well stirred again to obtain suspension. The suspension was dropped into 50 mL of water under high-speed rotation to obtain white precipitate. The liquid substance containing the precipitate was made into suspension by ultrasonic waves and thereafter filtered, and the resulting solid was washed in a large amount of water to obtain powder. The resulting powder was dried, and 30 mL of acetone was added thereto and suspended by ultrasonic waves to obtain suspension. The suspension was filtered to recover solid, which was washed in a large amount of acetone. The process of washing in a large amount of water-drying-acetone suspension-filtering-washing in acetone was repeated again to obtain a polyrotaxane B-1 as the final product (yield: 50 mg).

### <Identification of polyrotaxane>

The polyrotaxane B-1 was dissolved in pyridine-d⁵ to measure ¹H-NMR, and then a peak derived from polydimethylsiloxane, a peak derived from γ-CD and a peak derived from TMTC were observed in the vicinity of 0.5 ppm, at 4 to 5 ppm and in the vicinity of 3.7 ppm and 7 ppm, respectively. Thus, it was confirmed that the polyrotaxane was produced, that is, a compound, in which both ends of the linear molecule (polydimethylsiloxane) of the pseudopolyrotaxane were capped with capping groups so as to prevent the dissociation of the cyclic molecule (γ-CD), was produced.

Comparisons among integrated values of each of the peaks show that the inclusion degree of γ-CD included in the polyrotaxane B-1 was 0.4 (the maximum inclusion is normalized to be 1).

### Example 2:

A polyrotaxane B-2 was obtained in a manner similar to Example 1 except that PDMSm having a molecular weight of 9,000 was used instead of PDMSm having a molecular weight of 26,000 in Example 1.

It was confirmed by ¹H-NMR, in a manner similar to Example 1, that the resulting polyrotaxane B-2 was produced. It was found that the inclusion degree of γ-CD included in the polyrotaxane B-2 was 0.9 (the maximum inclusion is normalized to be 1).

### Example 3:

### <Preparation of pseudopolyrotaxane A-2>

9.4 g of γ-CD was taken in a 200 ml recovery flask and 100 mL of ion-exchange water was added thereto and dissolved.

1000 mg of bis(3-carboxylpropyl)-terminated poly(dimethylsiloxane) (hereinafter, occasionally abbreviated simply as "PDMSBC") (average molecular weight: 28,000) was measured up in another 500 ml flask. The above-mentioned γ-CD aqueous solution was added to the flask at a time while applying ultrasonic waves, and further stirred for 30 minutes while applying ultrasonic waves. Thereafter, the solution stood still at room temperature (25°C) for 3 days to obtain white suspension. The resulting suspension was subject to centrifugal separation to obtain precipitate and dispose of supernatant liquid. 100 ml of purified water was added again to the resulting precipitate and stirred, thereby to obtain suspension, which was subject to centrifugal separation again to obtain precipitate. The process was repeated once more (three-time centrifugal separation in total) and the resulting precipitate (containing water) was frozen by liquid nitrogen and thereafter freeze-dried for 2 days to obtain a pseudopolyrotaxane A-2 (2.8 g).

### <Preparation of polyrotaxane B-2>

42 mg of N-(4,4',4"-trimethoxytrityl)-butanediamine (hereinafter, abbreviated simply as "TMTBA"), 44 mg of (benzotriazole-1-yloxy)tris(dimethylamino)phosphonium hexafluorophosphate (hereinafter, abbreviated simply as "BOP") and 19 µl of diisopropylethylamine (hereinafter, abbreviated simply as "DIPA") were taken in a 50 ml recovery flask under argon atmosphere, and 1 mL of dehydrated acetonitrile-N,N-dimethylformamide (hereinafter, "N,N-dimethylformamide" is abbreviated simply as "DMF") mixed solvent (volume ratio 80:20) was further added thereto to dissolve TMTBA, BOP and DIPA.

100 mg of the pseudopolyrotaxane A-2 obtained in the above was separately taken in a glass vessel under argon atmosphere. The TMTBA solution was added to the vessel at a time, and stood still at room temperature (25°C) for 24 hours without stirring. The pseudopolyrotaxane was not dissolved in the acetonitrile-DMF mixed solvent and the reaction was performed in a heterogeneous system.

After the reaction, 1. 5 mL of DMF (containing 8 wt% lithium chloride) was added to the heterogeneous reaction solution to obtain an approximately transparent solution. The solution was dropped into 15 mL of dichloromethane under high-speed rotation to obtain light yellow precipitate. The resulting precipitate was fractionated by filtration, washed on the filter paper by using 10 ml of dichloromethane, and dried under reduced pressure by a vacuum pump. The solid obtained by drying was dissolved again in 1 mL of DMF (containing 8 wt% lithium chloride) and dropped into 15 mL of purified water under high-speed rotation to obtain brown precipitate. The liquid substance containing the precipitate was subject to centrifugal separation to settle solid and dispose of supernatant liquid. 100 ml of purified water was added again to the resulting precipitate and stirred, thereby to obtain suspension, which was subject to centrifugal separation again to obtain precipitate. The resulting precipitate (containing water) was frozen by liquid nitrogen and thereafter freeze-dried for 2 days to obtain a polyrotaxane B-2 as the final product (yield: 3 mg).

### Example 4:

### <Preparation of polyrotaxane B-2'>

A polyrotaxane B-2' was obtained in a manner similar to Example 3 except that 4,4',4"-trimethoxytritylamine (hereinafter, abbreviated simply as "TMTA") was used instead of the end capping agent TMTBA in Example 3, and following purification method was used.

With regard to the purification of the polyrotaxane B-2', a solid was first obtained by reprecipitation into dichloromethane in a manner similar to Example 3. The resulting solid was directly used for the following modification reaction.

### <Acetylation of polyrotaxane B-2' (polyrotaxane B-2") and identification thereof>

200 mg of the above-mentioned polyrotaxane B-2' was taken in a 50 ml recovery flask and dissolved in 1 ml of DMF (containing 4 wt% lithium chloride).

1.31 ml of acetic anhydride, 11.3 mg of N,N-dimethyl-4-aminopyridine (hereinafter, abbreviated simply as "DMAP") and 1.25 ml of pyridine were dissolved in 1 ml of DMF (containing 4 wt% lithium chloride) in another 50 ml flask. The solution was dropped into the polyrotaxane B-2' solution and stirred at room temperature for one night. The resulting reaction solution was dropped into 15 mL of purified water under high-speed rotation to obtain a polyrotaxane B-2" such that hydroxyl groups of γ-CD were acetylated (67 mg).

The resulting polyrotaxane B-2" was dissolved in dichloroform to measure H-NMR, and then it was confirmed that 90% of hydroxyl groups of γ-CD were acetylated. The acetylated polyrotaxane B-2" was dissolved in chloroform to measure GPC, and then it was confirmed that the molecular weight was increased to approximately twice the molecular weight of PDMSBC, and that a compound, in which both ends of the linear molecule (polydimethylsiloxane) of the pseudopolyrotaxane were capped, was produced.

The molecular weight estimated by GPC shows that the inclusion degree of γ-CD included in the polyrotaxane B-2' was 0.1 (the maximum inclusion is normalized to be 1).

### Example 5:

### <Preparation of both-end-actively-esterified polydimethylsiloxane C-1>

3.00 g of PDMSBC (average molecular weight: 28,000) was taken in a 100 ml three-necked flask and dissolved in 6 ml of dehydrated dichloromethane.

327 mg of 4-nitrophenol and 485 mg of dicyclohexylcarbodiimide were measured up in another 100 ml flask and dissolved in 6 ml of dehydrated dichloromethane. The solution was added to the DMSBC solution and stirred at room temperature for one night. The resulting reaction solution was first filtered, and the solvent was distilled off the resulting filtrate by a rotary evaporator to obtain a colorless oily substance. The oily substance was dissolved in n-hexane and cooled at a temperature of 4°C, thereby to precipitate out a crystal of excessive 4-nitrophenol. This was filtered, thereby to remove 4-nitrophenol, and the solvent was distilled off again to obtain a colorless oily substance. These recrystallization and filtration were repeated once more, and the solvent was distilled off again to obtain both end-actively esterified polydimethylsiloxane C-1 (3.19 g).

### <Identification of both-end-actively-esterified polydimethylsiloxane C-1>

Infrared absorption spectrum of the both-end-actively esterified polydimethylsiloxane C-1 was measured, showing that a signal derived from the ester bond was observed at 1775 cm⁻¹ (a signal derived from the carboxyl group was observed at 1720 cm⁻¹ in PDMSBC before being activated). The polydimethylsiloxane C-1 was dissolved in dichloroform to measure ¹H-NMR, and then a peak derived from the esterified 4-nitrophenyl group was observed at 8.3 ppm and 7.3 ppm in addition to a peak derived from polydimethylsiloxane in the vicinity of 0.07 ppm, so that it was confirmed that both ends of PDMSBC were 4-nitrophenyl-esterified.

### <Preparation of both-end-activated pseudopolyrotaxane A-3>

9.4 g of γ-CD was taken in a 200 ml recovery flask and 100 mL of ion-exchange water was added thereto and dissolved.

1000 mg of the above-mentioned both end-actively esterified polydimethylsiloxane C-1 was measured up in another 500 ml flask. The above-mentioned γ-CD aqueous solution was added to the flask at a time while applying ultrasonic waves, and further stirred for 30 minutes while applying ultrasonic waves. Thereafter, the solution stood still at room temperature (25°C) for 3 days to obtain light yellow suspension. The resulting suspension was subject to centrifugal separation to obtain precipitate and dispose of supernatant liquid. 100 ml of purified water was added again to the resulting precipitate and stirred, thereby to obtain suspension, which was subject to centrifugal separation again to obtain precipitate. The process was repeated once more (three-time centrifugal separation in total) and the resulting precipitate (containing water) was frozen by liquid nitrogen and thereafter freeze-dried for 2 days to obtain a pseudopolyrotaxane A-3 (1.7 g).

### <Identification of both-end-activated pseudopolyrotaxane>

Infrared absorption spectrum of the both-end-activated pseudopolyrotaxane A-3 was measured, showing that a signal derived from the ester bond at 1775 cm⁻¹, which was also observed in the both end-actively esterified polydimethylsiloxane C-1, was observed. In order to analyze in further detail, a linear macromolecule was extracted from the both end-activated pseudopolyrotaxane A-3 in the following procedure. The both-end-activated pseudopolyrotaxane A-3 (21 mg) was dissolved in DMF (0.3 ml) and dropped into dichloromethane (4 ml), thereby to precipitate the included γ-CD, and the solvent was distilled off the filtrate obtained by filtration to obtain a colorless oily substance. Infrared absorption spectrum of the oily substance was measured, showing that a signal derived from the ester bond at 1775 cm⁻¹ was clearly observed, while a signal derived from the carboxyl group at 1720 cm⁻¹ was not observed at all, so that it may be confirmed that the both end-activated pseudopolyrotaxane A-3 was not deactivated at all.

### <Preparation of polyrotaxane B-3>

126 mg of TMTBA and 57 µl of DIPA were taken in a 50 ml recovery flask under argon atmosphere, and 7 mL of dehydrated acetonitrile was further added thereto to dissolve TMTBA and DIPA.

1000 mg of the both-end-activated pseudopolyrotaxane A-3 obtained in the above was separately taken in a glass vessel under argon atmosphere. The TMTBA solution was added to the vessel at a time, and stood still at room temperature (25°C) for 24 hours without stirring. The both-end-activated pseudopolyrotaxane was not dissolved in the acetonitrile and the reaction was performed in a heterogeneous system.

After the reaction, 5 mL of DMF (containing 8 wt% lithium chloride) was added to the heterogeneous reaction solution to obtain an approximately transparent solution. The solution was dropped into 150 mL of dichloromethane under high-speed rotation to obtain light yellow precipitate. The resulting precipitate was fractionated by filtration, washed on the filter paper by using 50 ml of dichloromethane, and dried under reduced pressure by a vacuum pump. The solid obtained by drying was dissolved again in 5 mL of DMF (containing 8 wt% lithium chloride) and dropped into 150 mL of purified water under high-speed rotation to obtain white precipitate. The liquid substance containing the precipitate was subject to centrifugal separation to settle solid and dispose of supernatant liquid. 100 ml of purified water was added again to the resulting precipitate and stirred, thereby to obtain suspension, which was subject to centrifugal separation again to obtain precipitate. The resulting precipitate (containing water) was frozen by liquid nitrogen and thereafter freeze-dried for 2 days to obtain a polyrotaxane B-3 as the final product (yield: 72 mg).

### <Identification of polyrotaxane B-3>

The polyrotaxane B-3 was dissolved in DMF-d⁷ (containing 8 wt% lithium chloride) to measure ¹H-NMR, and then a peak derived from polydimethylsiloxane, a peak derived fromy-CD and a peak derived from TMTBA were observed in the vicinity of 0.15 ppm, at 3.7 to 4.0 ppm, 4.8 ppm, 5.0 ppm and 5.8 ppm, and at 1.3 ppm, 1.6 ppm, 2.0 ppm, 3.5 ppm and in the vicinity of 7 ppm, respectively; thus, it was confirmed that the polyrotaxane was produced, that is, a compound, in which both ends of the linear molecule (polydimethylsiloxane) of the pseudopolyrotaxane were capped with capping groups so as to prevent the dissociation of the cyclic molecule (γ-CD), was produced.

Comparisons among integrated values of each of the peaks show that the inclusion degree of γ-CD included in the polyrotaxane B-3 was 0.05 (the maximum inclusion is normalized to be 1).

In addition, when solubility of the polyrotaxane B-3 was examined with various solvents, it was confirmed that the polyrotaxane was not dissolved in DMF and dimethylacetamide but yet easily dissolved in these solvents in the presence of 8 wt% lithium chloride or lithium bromide. On the other hand, it was confirmed that the both-end-activated pseudopolyrotaxane A-3 was dissolved in DMF containing no salts whatever. It was also confirmed, from the reasons of remarkable differences in such solubilities, that a compound, in which both ends of the linear molecule (polydimethylsiloxane) of the pseudopolyrotaxane were capped, was produced.

### Example 6:

A polyrotaxane B-4 was obtained in a manner similar to Example 5 except that PDMSBC having a molecular weight of 4, 600 was used instead of PDMSBC having a molecular weight of 28,000 in Example 5.

It was confirmed, from assignment by ¹H-NMR and changes in solubilities by end capping in a manner similar to Example 5, that the resulting polyrotaxane B-4 was produced. It was found that the inclusion degree of γ-CD included in the polyrotaxane B-4 was 0.05 (the maximum inclusion is normalized to be 1).

### Example 7:

### <Crosslinking of polyrotaxane B-3>

The polyrotaxane B-3 was dissolved in DMF containing 8 wt% lithium chloride to chemically crosslink γ-CD to each other on the polyrotaxane by adding hexamethylene diisocyanate (hereinafter, abbreviated simply as "HMDI"). The crosslinking conditions were as shown in Table 1, and it was confirmed that a transparent gel was obtained in all of the conditions.

**Table 1. Conditions of crosslinking of Polyrotaxane B-3**

| | Concentration of Polyrotaxane | Concentration of HMDI | Crosslinking Temperature | Time for gelation |
|---|---|---|---|---|
| Experiment 1 | 13 wt % | 2 wt % | 70°C | 10-30 minutes |
| Experiment 2 | 10 wt % | 5 wt % | 70°C | 10-30 minutes |
| Experiment 3 | 16 wt % | 1 wt % | 25°C | Within 3 days |

### Example 8:

### <Preparation of polyrotaxane B-5>

A polyrotaxane B-5 was obtained in a manner similar to Example 5 except that N-(4,4',4"-trimethoxytrityl)-hexanediamine was used instead of the end capping agent TMTBA in Example 5.

It was confirmed, from assignment by ¹H-NMR and changes in solubilities by end capping in a manner similar to Example 5, that the resulting polyrotaxane B-5 was produced. It was found that the inclusion degree of γ-CD included in the polyrotaxane B-5 was 0.05 (the maximum inclusion is normalized to be 1).

## Claims

1. A polyrotaxane comprising a pseudopolyrotaxane, which has a linear molecule and a cyclic molecule(s) in which the linear molecule is included in a cavity (cavities) of the cyclic molecule(s) in a skewered manner, and capping groups, each of which locates at each end of the pseudopolyrotaxane in order to prevent the dissociation of the cyclic molecule(s),
wherein a main chain backbone of said linear molecule consists essentially of a backbone represented by following formula X:

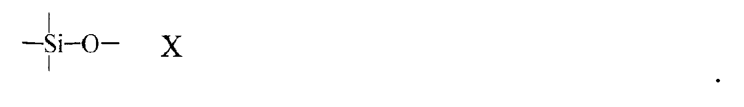

2. The polyrotaxane according to claim 1, wherein said linear molecule consists essentially of a main chain backbone represented by following formula I:

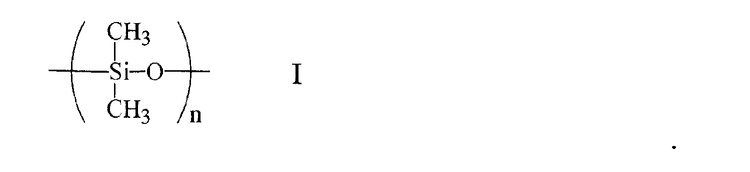

3. The polyrotaxane according to claim 1 or 2, wherein a molecular weight of said linear molecule is 3,000 or more.

4. The polyrotaxane according to any one of claims 1 to 3, wherein said capping groups are at least one selected from the group consisting of a group having a triphenylmethyl group (each phenyl group may be substituted), a group having a cyclodextrin derivative, a group having a silsesquioxane derivative, a group having a crown ether derivative, a group having a porphyrin derivative, a group having a phthalocyanine derivative, a group having a tetraphene derivative, a group having a chrysene derivative, a group having a rhodamine derivative, a group having a fluorescein derivative, and a group having a dendrimer.

5. The polyrotaxane according to any one of claims 1 to 4, wherein said cyclic molecule is derived fromy-cyclodextrin and said linear molecule is polydimethylsiloxane.

6. The polyrotaxane according to any one of claims 1 to 5, wherein said cyclic molecule is derived from γ-cyclodextrin, said linear molecule is polydimethylsiloxane, and said capping groups are a group having a triphenylmethyl group (each phenyl group may be substituted).

7. The polyrotaxane according to any one of claims 1 to 6, wherein said linear molecule is polydimethylsiloxane having at an end a group having an -NH₂ group.

8. The polyrotaxane according to any one of claims 1 to 6, wherein said linear molecule is polydimethylsiloxane having at an end a group having a -COOH group.

9. The polyrotaxane according to any one of claims 1 to 6, wherein said linear molecule is polydimethylsiloxane having at an end a group having an active ester group.

10. The polyrotaxane according to claim 9, wherein said active ester group is at least one selected from the group consisting of groups represented by formulae IV-1 to IV-6:

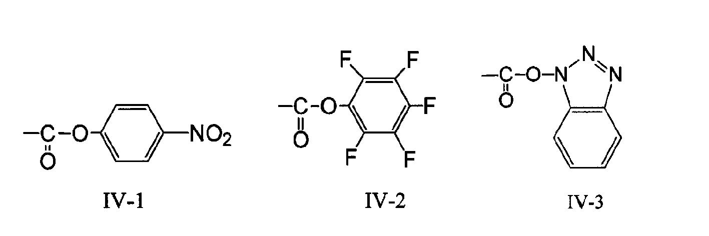

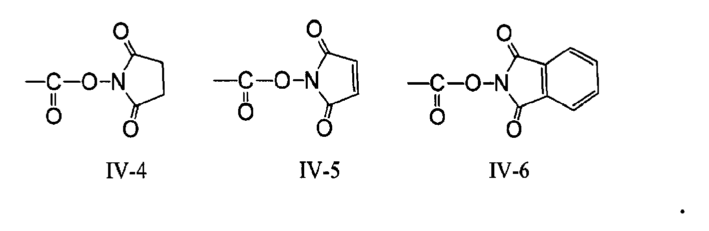

11. The polyrotaxane according to any one of claims 4 to 10, wherein a group having said triphenylmethyl group (each phenyl group may be substituted) is any one of groups represented by formulae III-1 to III-3, wherein x represents an integer of 2 to 8:

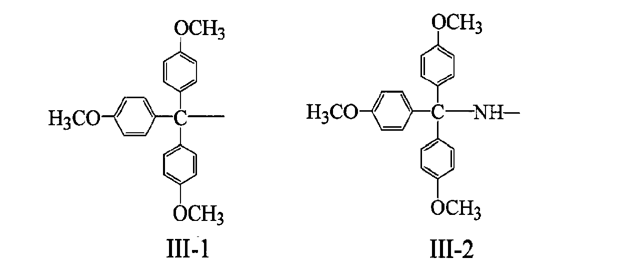

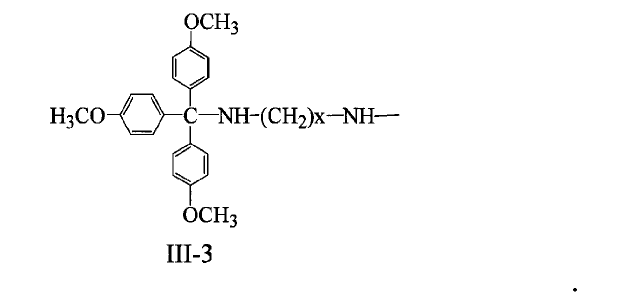

12. The polyrotaxane according to any one of claims 1 to 11, wherein the linear molecule has the cyclic molecule included in a skewered manner at an amount of 0.001 to 0.9 of a maximum inclusion amount, which is defined as an amount at which the cyclic molecules can be included at maximum when the linear molecule has the cyclic molecules included in a skewered manner, and the amount at maximum is normalized to be 1.

13. A material comprising the polyrotaxane according to any one of claims 1 to 12.

14. A method for producing a polyrotaxane, wherein the polyrotaxane comprises a pseudopolyrotaxane, which has a linear molecule and a cyclic molecule (s) in which the linear molecule is included in a cavity (cavities) of the cyclic molecule(s) in a skewered manner, and capping groups, each of which locates at each end of the pseudopolyrotaxane in order to prevent the dissociation of the cyclic molecule(s), and a main chain backbone of said linear molecule consists essentially of -Si-O-;
the method comprising following steps a) and b), and the steps are performed in random order and thereafter the following step c) is provided;
a) a step of preparing a pseudopolyrotaxane, wherein a main chain backbone of a linear molecule thereof consists essentially of a backbone represented by following formula X;
b) a step of dissolving a capping group precursory compound, which forms said capping group, in a solvent to obtain a solution of said capping group precursory compound; and
c) a step of adding said solution of said capping group precursory compound to said psaeudopolyrotaxane to obtain a pseudopolyrotaxane dispersion, and thereafter reacting said pseudopolyrotaxane with said capping group precursory compound to obtain said polyrotaxane;
wherein said solvent is capable of dissolving said capping group precursory compound and has low affinity with both of said linear molecule and said cyclic molecule:

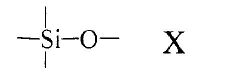

15. The method according to claim 14, wherein said solvent is selected from the group consisting of 1,4-dioxane, acetonitrile, acetone, tetrahydrofuran, diethyl ether, chloroform, dichloromethane and dimethylformamide, and mixed solvent thereof.

16. The method according to claim 14 or 15, wherein said linear molecule of said pseudopolyrotaxane is polydimethylsiloxane having at an end a group having an -NH₂ group; and
said capping group precursory compound is a compound represented by the formula III'-1:

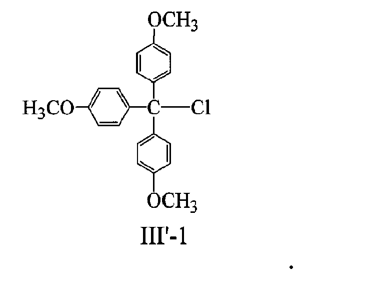

17. The method according to claim 14 or 15, wherein said linear molecule of said pseudopolyrotaxane is polydimethylsiloxane having at an end a group having a -COOH group; and
said capping group precursory compound is a compound represented by the formula III'-2 or the formula III'-3, wherein x represents an integer of 2 to 8:

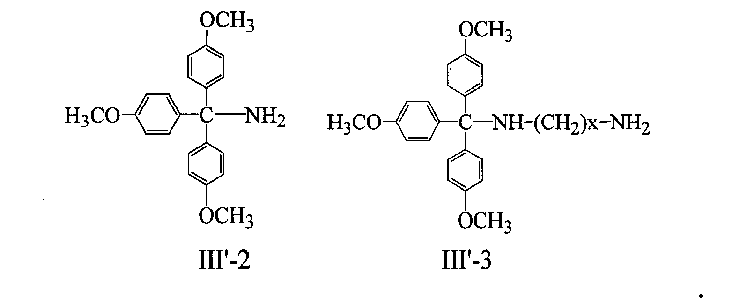

18. The method according to claim 14 or 15, wherein said linear molecule of said pseudopolyrotaxane is polydimethylsiloxane having at an end a group having a -COOH group;
the polydimethylsiloxane is reacted with an active ester group introductory compound to form polydimethylsiloxane having at an end a group having an active ester group;
the resulting polydimethylsiloxane is used as said linear molecule in said step a); and
said capping group precursory compound is a compound represented by the formula III'-3, wherein x represents an integer of 2 to 8:

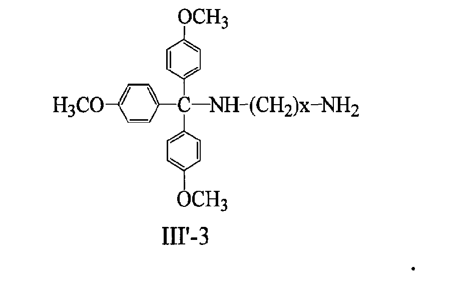

19. The method according to claim 18, wherein said active ester group introductory compound is one selected from the group consisting of the formulae V-1 to V-6; and
said active ester group is one selected from the group consisting of groups represented by the formulae IV-1 to IV-6 corresponding to the formulae V-1 to V-6, respectively:

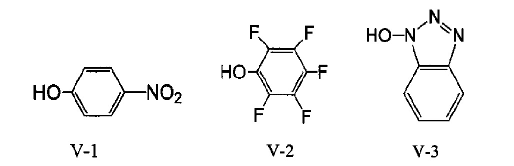

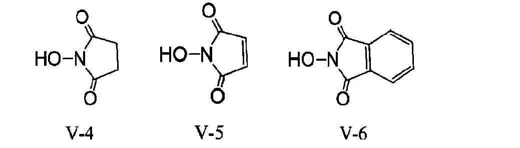

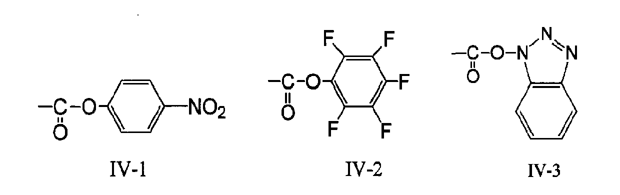

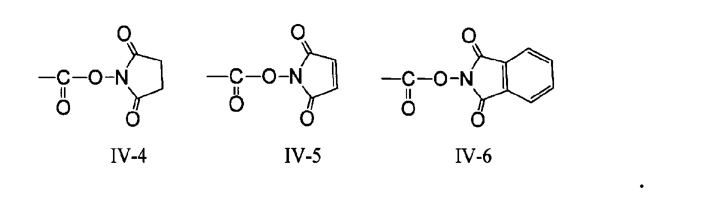

20. The method according to claim 19, wherein said active ester group introductory compound is a compound represented by the formula V-1 and said active ester group is a group represented by the formula IV-1.

21. A crosslinked polyrotaxane comprising a first polymer and a first polyrotaxane, such that all or a part of the first polymer and all or a part of the first polyrotaxane are crosslinked through a chemical bond;
wherein said first polyrotaxane comprises a first pseudopolyrotaxane, which has a first linear molecule and a first cyclic molecule (s) in which the first linear molecule is included in a cavity (cavities) of the first cyclic molecule (s) in a skewered manner, and first capping groups, each of which locates at each end of the first pseudopolyrotaxane in order to prevent the dissociation of the first cyclic molecule(s), and a main chain backbone of said first linear molecule consists essentially of a backbone represented by following formula X:

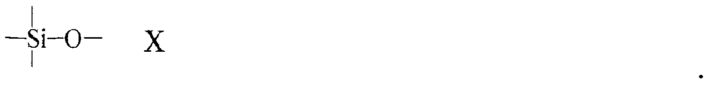

22. The crosslinked polyrotaxane according to claim 21,
wherein said first polymer is a second polyrotaxane;
said second polyrotaxane comprises a second pseudopolyrotaxane, which has a second linear molecule and a second cyclic molecule (s) in which the second linear molecule is included in a cavity (cavities) of the second cyclic molecule(s) in a skewered manner, and second capping groups, each of which locates at each end of the second pseudopolyrotaxane in order to prevent the dissociation of the second cyclic molecule(s); and
said first and second polyrotaxanes are bonded through a chemical bond between said first and second cyclic molecules.

23. The crosslinked polyrotaxane according to claim 22, wherein a main chain backbone of said second linear molecule in said second polyrotaxane consists essentially of a backbone represented by the formula X.

24. A method for producing a crosslinked polyrotaxane comprising a first polymer and a first polyrotaxane, such that all or a part of the first polymer and all or a part of the first polyrotaxane are crosslinked through a chemical bond;
wherein said first polyrotaxane comprises a first pseudopolyrotaxane, which has a first linear molecule and a first cyclic molecule (s) in which the first linear molecule is included in a cavity (cavities) of the first cyclic molecule (s) in a skewered manner, and first capping groups, each of which locates at each end of the first pseudopolyrotaxane in order to prevent the dissociation of the first cyclic molecule(s), wherein a main chain backbone of said first linear molecule consists essentially of a backbone represented by following formula X;
said method comprising the steps of:
A) preparing said first polyrotaxane; and
B) crosslinking said first polyrotaxane and said first polymer by a chemical bond:

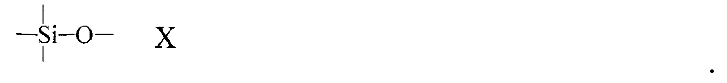

25. The method according to claim 24, wherein said first polymer is a second polyrotaxane;
said second polyrotaxane comprises a second pseudopolyrotaxane, which has a second linear molecule and a second cyclic molecule(s) in which the second linear molecule is included in a cavity (cavities) of the second cyclic molecule(s) in a skewered manner, and second capping groups, each of which locates at each end of the second pseudopolyrotaxane in order to prevent the dissociation of the second cyclic molecule(s); and
said first and second polyrotaxanes are bonded through a chemical bond between said first and second cyclic molecules.

26. The method according to claim 25, wherein the main chain backbone of said second linear molecule in said second polyrotaxane consists essentially of a backbone represented by the formula X.
